Europäisches Patentamt

(19) European Patent Office

Office européen des brevets

(11) **EP 0 825 532 B1**

(12) **EUROPÄISCHE PATENTSCHRIFT**

(45) Veröffentlichungstag und Bekanntmachung des Hinweises auf die Patenterteilung:
**19.06.2002 Patentblatt 2002/25**

(51) Int Cl.⁷: **G06F 9/46**

(21) Anmeldenummer: **97114072.8**

(22) Anmeldetag: **13.08.1997**

(54) **Verfahren zum Betreiben einer Mehrprozessor-Datenverarbeitungsanlage und nach diesem Verfahren arbeitenden Mehrprozessor-Datenverarbeitungsanlage**

Method of operation for a multiprocessor data processing system and multiprocessor data processing system operating according to said method

Procédé d'exploitation d'un système multiprocesseur de traitement de données et système multiprocesseur de traitement de données fonctionnant selon ce procédé

(84) Benannte Vertragsstaaten:
**AT DE DK**

(30) Priorität: **14.08.1996 DE 19632832**

(43) Veröffentlichungstag der Anmeldung:
**25.02.1998 Patentblatt 1998/09**

(73) Patentinhaber: **Fujitsu Siemens Computers GmbH**
**81739 München (DE)**

(72) Erfinder:
• **Rack, Joachim**
**81541 München (DE)**

• **Ströhmann, Jürgen**
**85614 Kirchseeon (DE)**

(74) Vertreter: **Epping, Wilhelm, Dipl.-Ing. et al**
**Epping Hermann & Fischer**
**Postfach 12 10 26**
**80034 München (DE)**

(56) Entgegenhaltungen:
**EP-A- 0 319 796        EP-A- 0 371 169**
**EP-A- 0 459 931        WO-A-93/18464**
**DE-A- 2 453 526**

EP 0 825 532 B1

**Beschreibung**

Die Erfindung betrifft ein Verfahren zum Betreiben einer Mehrprozossor-Datenverarbeitungsanlage mit mindestens zwei Prozessoren. Eine solche Mehrprozessor-Datenverarbeitungsanlage wird im allgemeinen durch ein einziges Betriebssystem gesteuert, z.B. durch das Betriebssystem BS 2000 der SIEMENS NIXDORF INFORMATIONSSYSTEME AG. Diese Mehrprozessor-Datenverarbeitungsanlage, kurz Mehrprozessoranlage, hat mindestens zwei gleichartige Prozessoren, die gleichzeitig Aufträge zur Datenverarbeitung bearbeiten können.

Über eine Vielzahl von an die Mehrprozessoranlage angeschlossenen Eingabegeräten zur Dateneingabe werden laufend Aufträge erzeugt, die auftragsbezogene Daten enthalten. Die erzeugten Aufträge werden in mindestens einem durch eine Auftragsannahme-Befehlsfolge definierten Annahmeprozeß auf einem der Prozessoren oder in mehreren gleichzeitig ablaufenden Annahmeprozessen auf mehreren Prozessoren von der Mehrprozessoranlage zunächst entgegengenommen und in einem Auftragsspeicher der Mehrprozessoranlage gespeichert. Als Eingabegeräte werden gewöhnlich Tastaturen in Verbindung mit Bildschirmgeräten verwendet. Die Aufträge enthalten auftragsbezogene Daten und gegebenenfalls auftragsbezogene Befehle.

Wird auf der Mehrprozessoranlage z.B. ein Buchungsprogramm für eine Großbank ausgeführt, so sind mehrere tausend Eingabegeräte mit der Mehrprozessoranlage verbunden. Jedes dieser Eingabegeräte kann Aufträge erzeugen, die je nach Art einer Buchung einen Teil oder die gesamte Buchung beinhalten. Die Annahmeprozesse werden üblicherweise auch als "Client"-Prozesse bezeichnet.

Auf einem der Prozessoren werden nach der Auftragsannahme in einem ersten Bearbeitungsprozeß die Aufträge beginnend zu einem ersten Zeitpunkt solange bearbeitet, wie unbearbeitete Aufträge im Auftragsspeicher gespeichert sind. Der Bearbeitungsprozeß wird auch "Server"-Prozeß genannt. Nach dem Bearbeiten der Aufträge können wieder neue Aufträge angenommen werden.

Bei bekannten Verfahren zum Betreiben einer Mehrprozessoranlage wird etwa zeitgleich auf einem anderen Prozessor ein zweiter Bearbeitungsprozeß beginnend zu einem zweiten Zeitpunkt solange ausgeführt, wie unbearbeitete Aufträge im Auftragsspeicher gespeichert sind. Der erste Bearbeitungsprozeß wird durch eine erste Bearbeitungs-Befehlsfolge und der zweite wird durch eine zweite Bearbeitungs-Befehlsfolge definiert. Bezüglich der Auftragsbearbeitung sind die beiden Bearbeitungs-Befehlsfolgen identisch. Ein solches bekanntes Verfahren hat jedoch eine Reihe von Nachteilen, die im folgenden erläutert werden.

Bei bekannten Mehrprozessoranlagen wird nach Annahme der Aufträge auf jedem Prozessor ein Bearbeitungsprozeß ausgeführt. Gibt es im Auftragsspeicher keine unbearbeiteten Aufträge mehr, so wird das Ausführen der beiden Bearbeitungsprozesse beendet. Nach dem Beenden dieser Bearbeitungsprozesse nimmt der jeweilige Bearbeitungsprozeß einen Wartezustand ein, bei dem der betreffende Prozessor wieder schnell auf den Bearbeitungsprozeß zugreifen kann. Dadurch wird es möglich, daß beim Erzeugen weiterer Aufträge aber auch der Annahmeprozeß auf diesem Prozessor erneut ausgeführt werden kann. Somit beginnen die oben beschriebenen Vorgänge von vorn.

Nachteilig ist hierbei, daß die Bearbeitungsprozesse alle etwa gleichzeitig beendet werden. Auf jedem der Prozessoren wird demzufolge etwa gleichzeitig ein Wartezustand eingenommen. Die Folge ist, daß anstatt der Bearbeitungsprozesse nun Annahmeprozesse auf allen Prozessoren ausgeführt werden. Anschließend werden wieder die Bearbeitungsprozesse auf den Prozessoren aufgerufen und deren Bearbeitungs-Befehlsfolgen ausgeführt. Bei jedem Wechsel zwischen Annahme- und Bearbeitungsprozeß auf den Prozessoren sind zusätzliche Vorbereitungs- bzw. Nachbereitungsschritte notwendig, die zu einer insgesamt langsamen Auftragsbearbeitung führen.

Zwei wichtige Leistungsparameter von Mehrprozessoranlagen sind die Antwortzeit und der Durchsatz. Die Antwortzeit ist die durchschnittliche Zeit, innerhalb der ein Auftrag vollständig bearbeitet wurde. Der Durchsatz ist die Anzahl bearbeiteter Aufträge in einer bestimmten Zeiteinheit. Ziel ist es, Mehrprozessoranlagen mit kurzer Antwortzeit und hohem Durchsatz zu entwickeln.

Da die Mehrprozessoranlage naturgemäß so entwickelt wird, daß sie während einer bestimmten Hochlastzeit noch einen zufriedenstellenden Durchsatz und eine zufriedenstellende Antwortzeit hat, treten die eben beschriebenen nachteiligen Wirkungen gerade zu dieser Hochlastzeit auf, die zum Beispiel in den üblichen Arbeitszeiten der Bedienpersonen an den Eingabegeräten liegt.

Aufgabe der Erfindung ist es, ein einfaches Verfahren zum Betreiben einer Mehrprozessoranlage anzugeben, das ein schnelles Bearbeiten einer Vielzahl von Aufträgen ermöglicht.

Diese Aufgabe wird durch ein Verfahren mit den Merkmalen des Patentanspruchs 1 gelöst, bei dem die folgenden Schritte ausgeführt werden:

a) über eine Vielzahl von an die Mehrprozessoranlage angeschlossenen Eingabegeräten zur Dateneingabe werden laufend Aufträge erzeugt, die auftragsbezogene Daten enthalten,

b) die erzeugten Aufträge werden in mindestens einem durch eine Auftragsannahme-Befehlsfolge definierten Annahmeprozeß auf mindestens einem der Prozessoren von der Mehrprozessoranlage entgegengenommen und in einem Auftragsspeicher der Mehrprozessoranlage gespeichert,

c) auf mindestens einem Prozessor werden in ersten Bearbeitungsprozessen Aufträge beginnend zu einem ersten Zeitpunkt so lange bearbeitet, wie unbearbeitete Aufträge im Auftragsspeicher gespeichert sind,

d) auf einem weiteren Prozessor werden in einem weiteren zweiten Bearbeitungsprozeß beginnend zu einem zweiten Zeitpunkt Aufträge so lange bearbeitet, bis eine vorgegebene Auftragsanzahl von gespeicherten Aufträgen zumindest teilweise bearbeitet wurde, wobei die ersten Bearbeitungsprozesse und der zweite Bearbeitungsprozeß durch erste und zweite Bearbeitungs-Befehlsfolgen definiert sind,

e) nach Beenden jedes Bearbeitungsprozesses nimmt der jeweilige Bearbeitungsprozeß einen Wartezustand ein, in welchem beim Erzeugen weiterer Aufträge auf dem jeweiligen Prozessor der Annahmeprozeß erneut ausgeführt werden kann.

Die Erfindung geht von der Erkenntnis aus, daß beim Abarbeiten der Aufträge mit Hilfe der Bearbeitungsprozesse den Prozessoren eine höhere Auftragsbearbeitungskapazität zur Verfügung steht, als auf Dauer benötigt wird. Die Folge der höheren Auftragsbearbeitungskapazität beim Stand der Technik ist, daß, wie bereits erwähnt, alle Prozessoren etwa gleichzeitig den Wartezustand einnehmen.

Bei der Erfindung wird nun der zweite Bearbeitungsprozeß beginnend zu einem zweiten Zeitpunkt solange ausgeführt, bis eine vorgegebene Auftragsanzahl von gespeicherten Aufträgen zumindest teilweise bearbeitet worden ist. Der zweite Bearbeitungsprozeß bearbeitet bei der Erfindung demzufolge nur eine vorgegebene Auftragsanzahl, z. B. nur einen einzigen Auftrag. Das Beenden des zweiten Bearbeitungsprozesses erfolgt also unabhängig von der Auftragslage. Das bedeutet, daß das Abarbeiten der zweiten Bearbeitungs-Befehlsfolge des zweiten Bearbeitungsprozesses auch dann beendet wird, wenn noch genügend Aufträge im Auftragsspeicher gespeichert sind.

Beim Beenden eines Bearbeitungsprozesses nimmt, wie erwähnt, dieser Bearbeitungsprozeß einen Wartezustand ein, der es ermöglicht, beim Erzeugen weiterer Aufträge den Auftragsannahmeprozeß auf dem Prozessor erneut auszuführen, auf dem die Bearbeitungs-Befehlsfolge des beendeten Bearbeitungsprozesses ausgeführt wurde. Bei der Erfindung wird durch das vorzeitige Beenden des zweiten Bearbeitungsprozesses und den damit verbundenen Wartezustand erreicht, däß der erste Bearbeitungsprozeß aus den zwei im folgenden erläuterten Gründen mehr Aufträge bearbeiten kann und demzufolge länger als bisher - häufig sogar fast andauernd - auf seinem jeweils zugeordneten Prozessor ausgeführt werden kann. Erstens bearbeitet der zweite Bearbeitungsprozeß im Wartezustand keine Aufträge, so daß die Aufträge, die dieser Bearbeitungsprozeß durchaus ausführen könnte, wenn er die Auftragsbearbeitung nicht vorzeitig beendet hätte, von dem ersten Bearbeitungsprozeß zusätzlich zu bearbeiten sind. Zweitens kann bei der Erfindung der Annahmeprozeß erneut und gleichzeitig mit dem ersten Bearbeitungsprozeß ausgeführt werden. Die nun durch den erneut ausgeführten Annahmeprozeß entgegengenommenen Aufträge können sofort oder nach relativ kurzer Zeit durch den bereits ausgeführten ersten Bearbeitungsprozeß auf dem ersten Prozessor bearbeitet werden.

Bei der Erfindung wird der jeweilige Prozessor für eine längere Zeit als bisher mit der Abarbeitung der Auftragsannahme-Befehlsfolge befaßt, ohne daß ein Wechsel von Annahme- und Bearbeitungsprozeß stattfindet. Dies ist darauf zurückzuführen, daß nicht alle Prozessoren gleichzeitig in den Wartezustand gehen und bereit sind, Annahmeprozesse auszuführen. Somit wird bei der Erfindung meist nur der eine Annahmeprozeß ausgeführt. Werden während der Auftragsannahme weitere Aufträge erzeugt, so wird das Beenden des Annahmeprozesses und der folgende Prozeßwechsel nochmals aufgeschoben. Sind alle momentan erzeugten Aufträge angenommen, so wird anstelle des Annahmeprozesses wieder der zweite Bearbeitungsprozeß auf dem Prozessor abgearbeitet, auf dem er bereits vorher ausgeführt worden ist.

Bei der Erfindung wird demzufolge ein häufiger Prozeßwechsel vermieden, der einen häufigen Wechsel von auszuführenden Auftragsannahme- und Bearbeitungs-Befehlsfolgen auf einem Prozessor zur Folge hat. Dadurch entfallen Maßnahmen zum Vorbereiten und Nachbereiten des Ausführens der jeweiligen Befehlsfolgen. Der damit zusammenhängende Zeitgewinn bewirkt, daß die Auftragsbearbeitung beschleunigt wird. Außerdem wird bei der Erfindung die Anzahl der Wartezustände verringert, wodurch die Bearbeitung von Aufträgen ebenfalls beschleunigt wird.

Die Erfindung läßt sich mit geringem Aufwand umsetzen, da die bereits bekannten Bearbeitungs-Befehlsfolgen der Bearbeitungsprozesse nur geringfügig angepaßt werden müssen. Demzufolge kann aufbauend auf bisherigen Erkenntnissen und Erfahrungen durch die Erfindung mit: geringem Aufwand eine weitere Erhöhung des Durchsatzes und eine Verkürzung der Antwortzeit gerade im kritischen Höchstlastfall erreicht werden.

Wird die vorgegebene Auftragsanzahl auf einen Wert größer als eins festgelegt, so wird vermieden, daß es beim Beenden des zweiten Bearbeitungsprozesses zu einer Lastbehinderung kommen kann. Lastbehinderung bedeutet, daß ein Prozessor ungenutzt bleibt, obwohl noch Aufträge im Auftragsspeicher gespeichert sind und Aufträge über die Eingabegeräte erzeugt werden. Ist die vorgegebene Auftragsanzahl gleich eins, so kommt es zu einer Lastbehinderung, wenn der durch den zweiten Bearbeitungsprozeß bearbeitete Auftrag nicht vollständig bearbeitet wird. Der Annahmeprozeß, der diesen nicht vollständig bearbeiteten Auftrag erzeugt hat, kann keinen weiteren Auftrag erzeugen. Wird jedoch mehr als ein Auftrag durch den zweiten Bearbeitungsprozeß bearbeitet, so verringert sich die Wahrscheinlichkeit für die Lastbehinderung dadurch, daß es unwahrscheinlicher ist, daß alle durch den zweiten Bearbeitungsprozeß bearbeiteten Aufträge nicht vollständig bearbeitet werden. Bei der Rückgabe mindestens eines bearbeiteten Auftrags kann jedoch auch ein neuer Auftrag erzeugt werden.

Bei einem Ausführungsbeispiel der Erfindung liegt der zweite Zeitpunkt nach dem ersten Zeitpunkt. Somit wird in diesem Ausführungsbeispiel der Erfindung der zuletzt gestartete Bearbeitungsprozeß in der Auftragsanzahl beschränkt. Durch diese Maßnahme wird erreicht, daß nicht eine fest vorbestimmte Bearbeitungs-Befehlsfolge immer in ihrer Auftragsanzahl begrenzt wird, sondern daß beim Betrieb der Mehrprozessoranlage der oben als zweiter Bearbeitungsprozeß bezeichnete Bearbeitungsprozeß jeweils neu bestimmt wird. Der zweite Bearbeitungsprozeß ist also der jeweils zuletzt gestartete Bearbeitungsprozeß unter der Bedingung, daß der andere Bearbeitungsprozeß momentan ausgeführt wird. Durch diese Maßnahme wird bei diesem Ausführungsbeispiel der Erfindung erreicht, daß die Bearbeitungs-Befehlsfolgen zum Definieren der Bearbeitungsprozesse nahezu identisch sein können. Demzufolge verringert sich der Aufwand für das Erstellen, Testen, Dokumentieren und Pflegen der Bearbeitungs-Befehlsfolgen im Vergleich zu verschiedenartigen Bearbeitungs-Befehlsfolgen.

In einem weiteren Ausführungsbeispiel der Erfindung ist jedem Prozessor ein schneller Zwischenspeicher zugeordnet, die auch als "Cache" bekannt sind. Werden auf einer Mehrprozessoranlage Prozessoren mit schnellen Zwischenspeichern verwendet, so können diese nur dann optimal genutzt werden, wenn eine Befehlsfolge bzw. ein Prozeß eine längere Zeit auf einem Prozessor ausgeführt wird. Diese Forderung ergibt sich daraus, daß sich im schnellen Zwischenspeicher Kopien von Daten aus einem langsameren Speicher befinden, die vorsorglich in den Zwischenspeicher gespeichert werden. Ein Zeitgewinn tritt in der Regel erst auf, wenn auf Daten zugegriffen wird, die bereits im Zwischenspeicher gespeichert sind. Die Wahrscheinlichkeit, daß auf bereits im Zwischenspeicher gespeicherte Daten zugegriffen wird, steigt beim längeren Ausführen derselben Befehlsfolge auf dem jeweiligen Prozessor an. Durch die Erfindung wird aus obigen Gründen verhindert, daß eine Vielzahl von Prozeß- und damit Befehlsfolgenwechseln auf einem Prozessor stattfindet. Demzufolge kann beim Verwenden von schnellen Zwischenspeichern deren Ausnutzung erhöht werden.

Wird die Auftragsanzahl beim zuletzt gestarteten Bearbeitungsprozeß beschränkt und werden Zwischenspeicher verwendet, so wird durch den Bearbeitungsprozeß der Inhalt des jeweiligen Zwischenspeichers nur zu einem kleinen Teil verändert. Beim erneuten Ausführen des Annahmeprozesses lassen sich bereits bei der letzten Ausführung des Annahmeprozesses kopierte Daten im Zwischenspeicher erneut verwenden.

In einem weiteren Ausführungsbeispiel der Erfindung enthält die Mehrprozessoranlage eine erste Speicherzelle, die von allen Prozessoren beschrieben und gelesen werden kann. In die erste Speicherzelle wird beim Start des jeweiligen Bearbeitungsprozesses ein Namensdatum geschrieben, das den jeweiligen Bearbeitungsprozeß nach Art eines Namens eindeutig kennzeichnet und das eventuell in der ersten Speicherzelle bereits gespeicherte Namensdaten überschreibt. Das Namensdatum kann z.B. ein bestimmter Zahlenwert sein. Beim Ausführen von Bearbeitungsprozessen kann somit durch Lesen der ersten Speicherzelle festgestellt werden, welcher Bearbeitungsprozeß als letzter gestartet wurde, da nur dessen Namensdatum in der ersten Speicherzelle gespeichert wird. Somit kann ohne großen Kommunikationsaufwand zwischen den Bearbeitungsprozessen der ausgewählte Bearbeitungsprozess bestimmt werden. Auch ein Einbeziehen des Betriebssystems ist nicht notwendig, da bei der Erfindung zum Beispiel keine Information über eine Prozeßnummer erforderlich ist, die dem zu einer Bearbeitungs-Befehlsfolge gehörendem Bearbeitungsprozeß durch das Betriebssystem zugeordnet ist. Die Folge ist eine Vereinfachung des Betriebs der Mehrprozessoranlage.

In einem weiteren Ausführungsbeispiel enthält die Mehrprozessoranlage zusätzlich zur ersten Speicherzelle eine zweite Speicherzelle. Die zweite Speicherzelle wird als Zähler genutzt, der z.B. beim Start eines Bearbeitungsprozesses verringert wird und beim Beenden eines Bearbeitungsprozesses erhöht wird. Das Namensdatum wird nur dann in die erste Speicherzelle geschrieben, wenn in der zweiten Speicherzelle ein Datenwert gespeichert ist, der anzeigt, daß die restlichen Bearbeitungsprozesse bereits ausgeführt werden. Durch diese Maßnahme entsteht ein Freiraum, der es gestattet, bei der konkreten Ausführung der Erfindung je nach konkreter Mehrprozessoranlage eine schnelle Variante zur Durchführung des Verfahrens zu realisieren. Insbesondere wird erreicht, daß nicht nur anhand des Namensdatums in der ersten Speicherzelle der zuletzt gestartete Bearbeitungsprozeß ermittelt werden kann, sondern daß auch festgestellt wird, ob die anderen Bearbeitungsprozesse momentan ausgeführt werden.

Um Konflikte beim Zugreifen der Prozessoren auf die erste und die zweite Speicherzelle zu vermeiden, werden diese Speicherzellen zu einem sogenannten "atomaren" Bereich zusammengefaßt. In dem atomaren Bereich wird durch schaltungstechnische oder software-technische Maßnahmen sichergestellt, daß nur einer der Prozessoren der DV-Anlage auf den atomaren Bereich zu einer bestimmten Zeit zugreift. Der Zugriff der anderen Prozessoren wird in dieser Zeit verhindert. Eine Möglichkeit zur Realisierung eines atomaren Bereichs ist im Patentanspruch 8 angegeben.

Werden bei einem Vergleich der Anzahl der durch den zweiten Bearbeitungsprozeß bearbeiteten Aufträge mit der vorgegebenen Auftragsanzahl nur die Aufträge berücksichtigt, die vollständig durch diesen Bearbeitungsprozeß bearbeitet wurden, so kann erreicht werden, daß nach Eintritt des zweiten Bearbeitungsprozesses in den Wartezustand immer ein Auftrag vollständig bearbeitet wurde, der an den Annahmeprozeß zurückgegeben wird. Der betreffende Annahmeprozeß befindet sich seinerseits in einem Wartezustand, aus dem er durch die Rückgabe des Auftrages geweckt wird. Somit können weitere Aufträge durch diesen Annahmeprozeß entgegengenommen werden. Ein Auftrag wird z.B. nicht vollständig bearbeitet, wenn die Bearbeitung aufgrund einer Sperrsituation unterbrochen wird oder wenn zur Auftragsausführung ein Zugriff auf einen Speicher mit langer Zugriffszeit notwendig ist.

In einem weiteren Ausführungsbeispiel der Erfindung wird beim Beenden eines der Bearbeitungsprozesse das in der ersten Speicherzelle momentan gespeicherte Namensdatum gelöscht, da die Überkapazität für die Auftragsbearbeitung nicht mehr vorhanden ist. Liegt diese Überkapazität nicht mehr vor, so wird durch das Löschen des Namensdatums erreicht, daß der zweite Bearbeitungsprozeß nicht mehr identifiziert werden kann und sich demzufolge wie die restlichen Bearbeitungsprozesse verhält, d.h. solange Aufträge bearbeitet, bis keine unbearbeiteten Aufträge mehr im Auftragsspeicher gespeichert sind. Das bedeutet, daß die vorgegebene Auftragsanzahl nicht mehr berücksichtigt wird. Das Verfahren verhält sich nun wie die bekannten Lösungen, bis die höhere Auftragsbearbeitungskapazität wieder gegeben ist.

Die Erfindung betrifft außerdem eine Mehrprozessoranlage mit den Merkmalen des Patentanspruchs 12. Für diese Mehrprozessoranlage gelten die oben genannten vorteilhaften Wirkungen.

Durch die Erfindung kann auf dem bereits sehr weit entwickelten Gebiet der Mehrprozessoranlagen eine weitere Geschwindigkeitserhöhung um einige Prozentpunkte beim Bearbeiten von Aufträgen erreicht werden. Dieser Vorteil kommt insbesondere bei großen Datenverarbeitungsanlagen mit einer Vielzahl von angeschlossenen Endgeräten zum Tragen.

Im folgenden werden Ausführungsbeispiele der Erfindung anhand der Figuren erläutert. Darin zeigen:

Figur 1 wesentliche elektronische Funktionselemente einer Mehrprozessoranlage,

Figur 2 eine schematische Darstellung wesentlicher Vorgänge in der Mehrprozessoranlage,

Figur 3 eine schematische Darstellung von Kommunikationsvorgängen zwischen Bearbeitungsprozessen und Annahmeprozessen,

Figuren 4A und 4B ein Flußdiagramm für ein Ausführungsbeispiel des Verfahrens nach der Erfindung, und

Figur 5 eine Darstellung der Vorgänge in der Mehrprozessoranlage einmal ohne und ein andermal mit Verwenden der Erfindung.

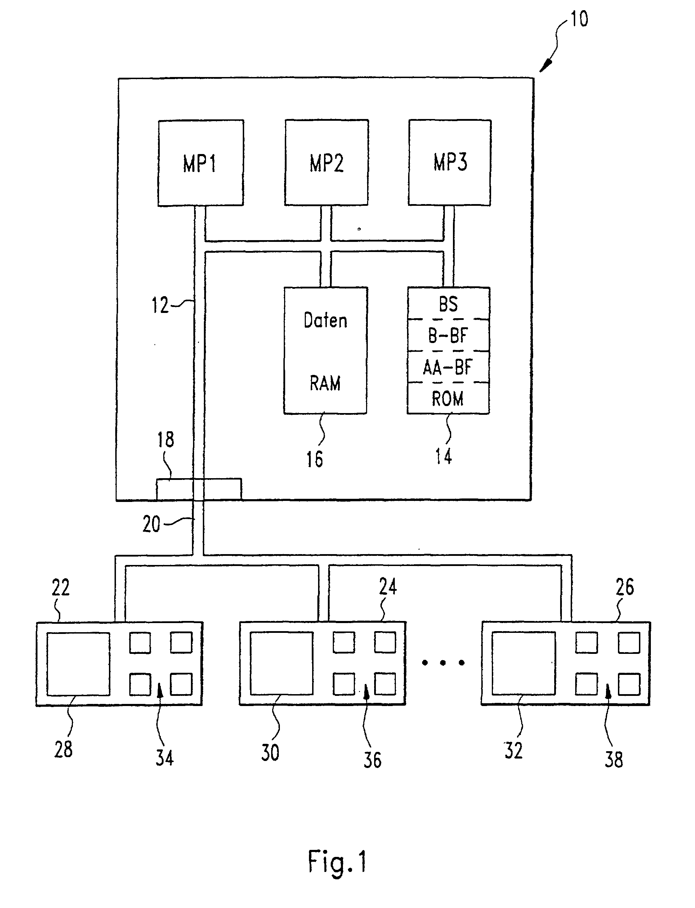

Figur 1 zeigt wesentliche elektronische Funktionsbausteine einer Mehrprozessoranlage 10. Diese Mehrprozessoranlage 10 enthält einen ersten Prozessor MP1, einen zweiten Prozessor MP2 und einen dritten Prozessor MP3. Die Prozessoren MP1, MP2 und MP3 sind gleichartig aufgebaut und an ein Bussystem 12 der Prozessoranlage 10 angeschlossen. Das Bussystem 12 enthält Daten-, Adreß- und Steuerleitungen. Mit dem Bussystem 12 ist ein Festwertspeicher 14 (ROM) verbunden, in dem unter anderem das Betriebssystem BS der Mehrprozessoranlage 10 als Befehlsfolge gespeichert ist. Mit dem Bussystem 12 ist außerdem ein flüchtiger Speicher 16 (RAM) verbunden, in welchen beim Betrieb der Mehrprozessoranlage 10 Daten gespeichert werden.

Daten und Befehlsfolgen können auch gemeinsam in einem Arbeitsspeicher (14, 16) gehalten werden. Die Kopplung der Prozessoren untereinander und mit dem Speicher kann auch durch spezifische Daten-, Adreß- und Steuerleitungen realisiert sein.

Das Betriebssystem BS der Mehrprozessoranlage 10 ist bei diesem Ausführungsbeispiel das Betriebssystem BS 2000/OSD Version 1.0 der SIEMENS NIXDORF INFORMATIONSSYSTEME AG. Dieses Betriebssystem hat die folgenden Merkmale:

- Das Betriebssystem BS ist für den Betrieb mehrerer Prozessoren MP1 bis MP3 geeignet. Beim Verwalten der Prozessoren MP1 bis MP3 werden Prozesse nach ihrer Wichtigkeit auf den Prozessoren MP1 bis MP3 ausgeführt. Die Vorrangigkeit eines bestimmten Prozesses wird auch als Priorität bezeichnet. Prozesse mit hoher Priorität werden vor Prozessen mit niedriger Priorität bearbeitet. Die Prioritäten können beim Betriebssystem BS 2000 fest vorgegeben werden.

- Beim Verwalten der Prozessoren werden zumindest für einen begrenzten Prioritätsunterschied bereits gestartete Prozesse nicht durch Prozesse mit höherer Priorität unterbrochen.

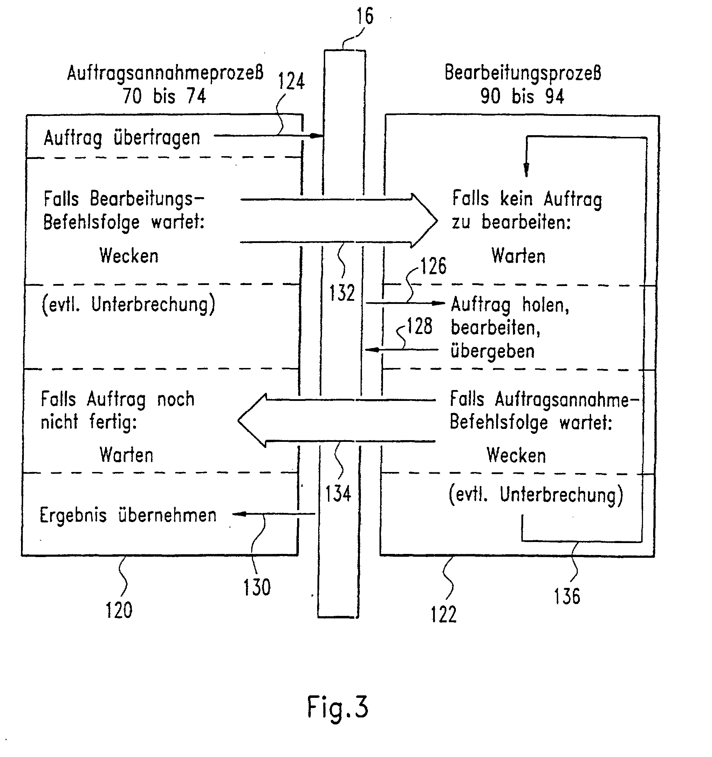

- Das Betriebssystem BS ermöglicht ein Kommunikationsverfahren zwischen Prozessoren MP1 bis MP3 mit synchronen Wartezuständen für die Prozesse (vgl. Figur 3). Das bedeutet, daß mehrere Prozesse in einem Wartezustand warten können. Wenn ein Signal, ein sogenanntes Wecksignal, für einen Prozeß für einen solchen Wartezustand generiert wird, so wird nachfolgend für diesen Prozeß der Wartezustand beendet. Wenn mehrere Prozesse in ein- und demselben Wartezustand verharren, wird durch ein Wecksignal genau für einen, allerdings beliebigen, Prozeß der Wartezustand beendet.

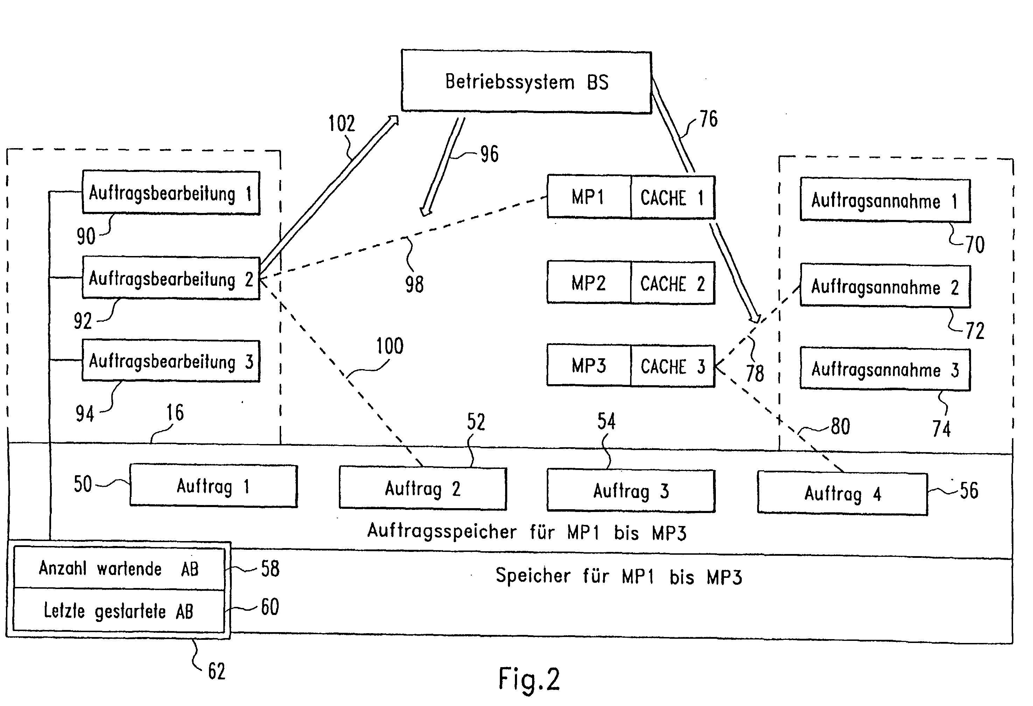

- Das Betriebssystem BS stellt Speicherbereiche zur Verfügung, die von den Prozessen nach dem bekannten Prinzip des "Shared Memory" gemeinsam genutzt und parallel gelesen und beschrieben werden können. Innerhalb dieser Speicherbereiche gibt es Speicherzellen, die einen sogenannten atomaren Bereich bilden (vgl. Figur 2, Bezugszeichen 62). Im atomaren Bereich kann sichergestellt werden, daß während eines Zugriffs durch einen der Prozessoren kein anderer Prozessor auf diesen atomaren Bereich zugreift.

Mit Hilfe einer Schnittstelle 18, die auf der einen Seite mit dem Bussystem 12 und auf der anderen Seite mit Übertragungsleitungen 20 verbunden ist, sind an die Übertragungsleitungen 20 angeschlossene Eingabegeräte 22 bis 26 mit der Mehrprozessoranlage 10 verbunden. Die Eingabegeräte 22 bis 26 werden von Bedienpersonen zur Dateneingabe verwendet. Jedes Eingabegerät 22, 24 bzw. 26 hat einen Bildschirm 28, 30 bzw. 32 und eine Tastatur 34, 36 bzw. 38.

Die Mehrprozessoranlage 10 wird beispielsweise von einer Bank zum Abwickeln von Buchungsaufträgen verwendet. Das Eingabegerät 22 befindet sich in diesem Fall in einer ersten Außenstelle der Bank, das Eingabegerät 24 in einer zweiten Außenstelle und das letzte Eingabegerät 26 in einer letzten Außenstelle. Die Bedienpersonen geben über die Eingabegeräte 22 bis 26 Buchungsaufträge ein, die in der Mehrprozessoranlage 10 bearbeitet werden müssen. Beim Bearbeiten dieser Aufträge werden die Prozessoren MP1 bis MP3 gegebenenfalls gleichzeitig zum Bearbeiten dieser Aufträge eingesetzt.

Eine schematische Darstellung wesentlicher Vorgänge in der Mehrprozessoranlage 10 bei der Auftragsbearbeitung zeigt die Figur 2. Im Speicher 16 werden auftragsbezogene Daten zu jedem Auftrag abgespeichert, der an den Eingabegeräten 22 bzw. 26 eingegeben wird. Dabei kann ein Auftrag auch nur einen Teil einer Buchungstransaktion enthalten. Zum Beispiel können der auf ein Konto zu überweisende Wert und die Kontonummer als Daten in einem der Aufträge abgespeichert sein. Im Speicher 16 ist bei diesem Beispiel ein erster Auftrag 50, ein zweiter Auftrag 52, ein dritter Auftrag 54 und ein vierter Auftrag 56 gespeichert. Außerdem enthält der Speicher 16 eine erste Speicherzelle 58, in der die jeweils aktuelle Anzahl von Annahmeprozessen eingetragen wird, die momentan im Wartezustand sind. In einer zweiten Speicherzelle 60 wird ein Datum gespeichert, das den Bearbeitungsprozeß nach Art eines Namens identifiziert, der bei gleichzeitiger Ausführung der auf der Mehrprozessoranlage 10 vorhandenen Bearbeitungsprozesse als letzter gestartet wurde.

Die Speicherzelle 58 und die Speicherzelle 60 bilden einen sogenannten "atomaren" Speicherbereich 62, in welchem durch schaltungstechnische Maßnahmen sichergestellt wird, daß beim Zugriff eines der Prozessoren, z.B. MP1, auf diesen Speicherbereich 62 die anderen beiden Prozessoren MP2 und MP3 nicht gleichzeitig zugreifen. Das bedeutet, daß jeweils einer der Prozessoren auch auf beide Speicherzellen 58 und 60 so zugreifen kann, daß sichergestellt ist, daß während des Zugriffs kein anderer Prozessor auf diese Speicherzellen 58 und 59 zugreift.

Das Betriebssystem BS kann das Ausführen von drei Auftrags-Annahmeprozessen 70 bis 74 auf jeweils einem der Prozessoren MP1 bis MP3 starten, angedeutet durch den Pfeil 76. In Figur 2 hat das Betriebssystem BS den zweiten Annahmeprozeß 72 auf dem Prozessor MP3 gestartet, angedeutet durch die Strichlinie 78. Beim Abarbeiten des Annahmeprozesses 72 auf dem Prozessor MP3 wird der vierte Auftrag 56 entgegengenommen und im Speicher 16 gespeichert (Strichlinie 80).

Das Betriebssystem BS startet weiterhin Bearbeitungsprozesse 90 bis 94 auf einem der Prozessoren MP1 bis MP3 (Pfeil 96). Die Bearbeitungsprozesse bearbeiten die im Speicher 16 gespeicherten Aufträge. Im Falle einer Buchung wird z.B. beim Bearbeiten eines Auftrags eine konkrete Buchung ausgeführt, indem der zu überweisende Wert auf dem einen Konto vom Kontostandswert abgezogen und auf dem anderen Konto zum aktuellen Kontostand addiert wird. Die Bearbeitungsprozesse 90 bis 94 haben im Ausführungsbeispiel die Bezeichnung UDS/SQL Version 1.2. (SIEMENS NIXDORF INFORMATIONSSYSTEME AG). Diese Version hat folgende Merkmale:

- Die Bearbeitungsprozesse 90 bis 94 sind für den Mehrprozessorbetrieb geeignet. Mehrere Bearbeitungsprozesse können gleichzeitig auf verschiedenen Prozessoren MP1 bis MP3 ausgeführt werden. Die Auswahl und Abarbeitung der Aufträge 50 bis 56 erfolgt innerhalb der Bearbeitungsprozesse 90 bis 94 ohne Mitwirkung des Betriebssystems BS; sogenanntes "user level threading".

- Beim Ausführen der Bearbeitungsprozesse 90 bis 94 wird ein Teil der Wartezustände dadurch vermieden, daß andere Aufträge 50 bis 56 ohne Verzögerung bearbeitet werden, so lange noch Aufträge 50 bis 56 zur Bearbeitung im Speicher 16 gespeichert sind. Zu diesen Wartezuständen gehört beispielsweise eine Plattenspeicher-Ein-/Ausgabe, das Warten auf die Freigabe einer auch "Semaphor" genannten Befehlssperrstrecke oder das Warten auf die Freigabe einer, auch "Lock" genannten, Datensperre. Dabei bedeutet Befehlssperrstrecke, daß bestimmte Befehle erst dann ausgeführt werden, wenn ein Signal ("Semaphor") die Ausführung erlaubt. Datensperre bedeutet, daß auf bestimmte Daten momentan nicht zugegriffen werden darf.

- Zwischen einem Auftrag 50 bis 56 und einem Bearbeitungsprozeß 90 bis 94 gibt es keine Bindung. Das heißt, ein Auftrag 50 bis 56 ist über einen Bearbeitungsabschnitt hinaus nicht an einen bestimmten Bearbeitungsprozeß 90 bis 94 gebunden, so daß auch andere Bearbeitungsprozesse 90 bis 94 die weitere Bearbeitung durchführen können.

- Die Anzahl der gleichzeitig ausführbaren Bearbeitungsprozesse 90 bis 94 kann vorgegeben werden.

In Figur 2 wird der zweite Bearbeitungsprozeß 92 auf dem Prozessor MP1 gestartet (Strichlinie 98). Beim Ausführen des Bearbeitungsprozesses 92 wird der Auftrag 52 bearbeitet (Strichlinie 100). Sind beim Beenden einer der Bearbeitungsprozesses 90 bis 94 keine Aufträge 50 bis 56 mehr im Speicher 16 vorhanden, so wird der jeweilige Prozessor MP1, MP2 oder MP3, auf dem die Bearbeitungs-Befehlsfolge des jeweiligen Bearbeitungsprozesses 90, 92 oder 94 abgearbeitet wurde, freigegeben (Pfeil 102). Das Betriebssystem BS kann daraufhin auf diesem Prozessor MP1, MP2 bzw. MP3 andere Prozesse starten und abarbeiten.

Dem Prozessor MP1 ist ein lokaler schneller Zwischenspeicher, ein sogenannter Cache, CACHE1 zugeordnet. In der Regel finden die Zugriffe des Prozessors MP1 auf den Speicher 16 und auf die Befehle einer auszuführenden Befehlsfolge über diesen Zwischenspeicher CACHE1 statt. Eine nicht dargestellte Zwischenspeicherverwaltung trägt die jeweils benötigten Datenbzw. Befehlsworte aus dem Speicher 16 bzw. dem Festwertspeicher 14 in den Zwischenspeicher CACHE1 ein. Vorsorglich werden dabei auch weitere Daten- bzw. Befehlsworte_aus dem Festwertspeicher 14 bzw. dem Speicher 16 in den Zwischenspeicher CACHE1 als Kopie übertragen. Auch den Prozessoren MP2 bzw. MP3 ist jeweils ein lokaler schneller Zwischenspeicher CACHE2 bzw. CACHE3 zugeordnet.

Figur 3 zeigt eine schematische Darstellung der Kommunikationsprozesse zwischen den Auftrags-Annahmeprozessen 70 bis 74 auf der linken Seite der Figur 3 und den Bearbeitungsprozessen 90 bis 94 auf der rechten Seite der Figur 3. Die wesentlichen Verfahrenschritte, die beim Ausführen eines der Auftragsannahmeprozesse 70 bis 74 ausgeführt werden, sind in einem linken Block 120 schematisch dargestellt. Die Verfahrensschritte, die beim Ausführen eines der Bearbeitungsprozesse 90 bis 94 ausgeführt werden, sind in einem rechten Block 122 dargestellt. Der Datenaustausch zwischen den Annahmeprozessen 70 bis 74 und den Bearbeitungsprozessen 90 bis 94 erfolgt über den Speicher 16, angedeutet durch Pfeile 124 bis 130. Weiterhin können die Annahmeprozesse 70 bis 74 Wecksignale an die Bearbeitungsprozesse 90 bis 94 senden (Pfeil 132). Die Bearbeitungsprozesse 90 bis 94 können ihrerseits Wecksignale an die Auftrags-Annahmeprozesse 70 bis 74 senden (Pfeil 134).

Erzeugt eine der Bedienpersonen über eines der Eingabegeräte 22 bis 26 einen Auftrag 50 bis 56, so wird dieser Auftrag 50 bis 56 beim Ausführen eines Auftrags-Annahmeprozesses 70 bis 74 im Speicher 16 gespeichert (Pfeil 124). Falls sich einer der Bearbeitungsprozesse 90 bis 94 im Wartezustand befindet, wird der Wartezustand durch ein Wecksignal beendet, das beim Ausführen des jeweiligen Annahmeprozesses 70 bis 74 erzeugt wird (Pfeil 132). Das Ausführen des jeweiligen Annahmeprozesses 70 bis 74 kann unterbrochen werden. Falls der einem Annahmeprozeß 70 bis 74 zugeordnete Auftrag noch nicht fertig ist, nimmt der jeweilige Annahmeprozeß 70 bis 74 einen Wartezustand ein. Der Wartezustand wird beendet, wenn ein Wecksignal durch den Bearbeitungsprozeß 90 bis 94 erzeugt wird, der den Auftrag 50 bis 56 bearbeitet hat (Pfeil 134). Nach dem Erzeugen des Wecksignals wird durch den Annahmeprozeß 70 bis 74 das Ergebnis aus dem Speicher 16 übernommen (Pfeil 130) und zum Beispiel zu dem jeweiligen Eingabegerät 22 bis 26 übertragen, an dem der Auftrag 50 bis 56 erzeugt wurde.

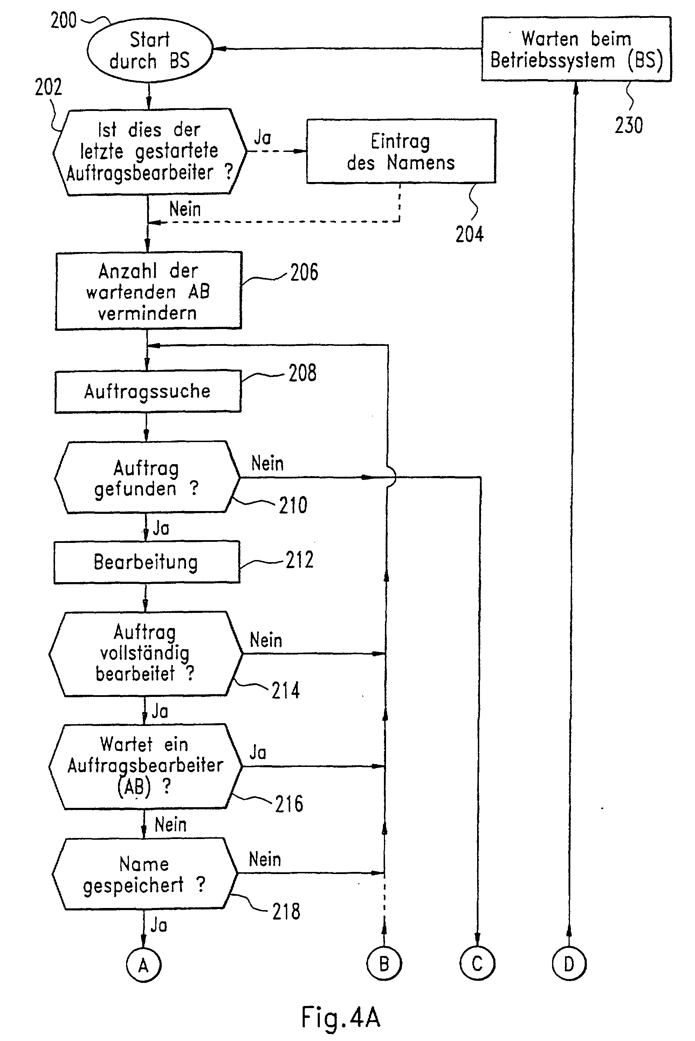

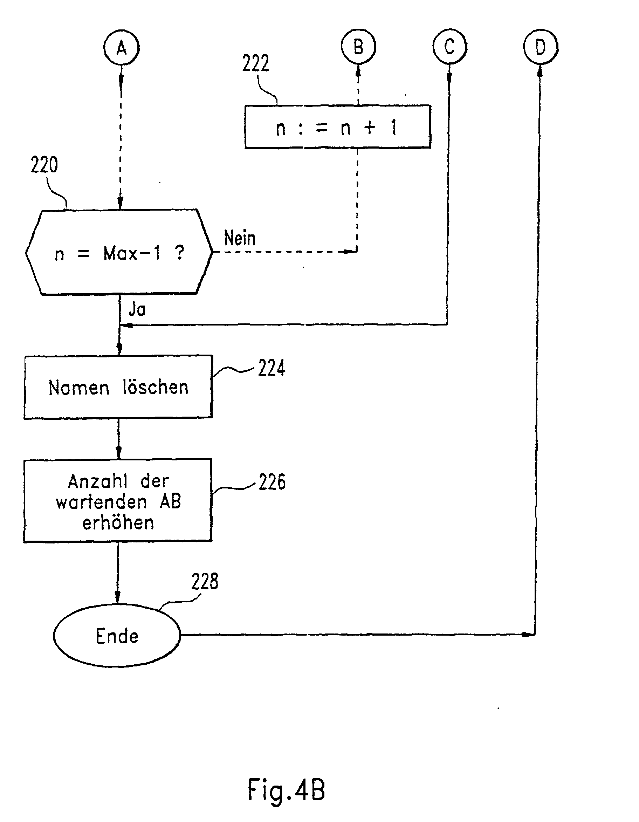

Die Bearbeitungsprozesse 90 bis 94 befinden sich in einem Wartezustand, wenn keine Aufträge 50 bis 56 zu bearbeiten sind. Sind Aufträge 50 bis 56 zu bearbeiten, so wird der Wartezustand durch ein Wecksignal (Pfeil 132) für einen Bearbeitungsprozeß 90 bis 94 beendet. Der Bearbeitungsprozeß 90 bis 94, der seinen Wartezustand beendet, holt einen der Aufträge 50 bis 56 aus dem Speicher 16 (Pfeil 126) und bearbeitet ihn. Anschließend wird der bearbeitete Auftrag 50 bis 56 wieder im Speicher 16 gespeichert (Pfeil 128). Falls der zum Auftrag 50 bis 56 gehörende Auftrags-Annahmeprozeß 70 bis 74 in einem Wartezustand ist, wird ein Wecksignal für diesen Prozeß erzeugt (Pfeil 134). Beim Ausführen der Bearbeitungsprozesses 90 bis 94 können Unterbrechungen auftreten. In diesem Fall und falls ein Auftrag 50 bis 56 vollständig bearbeitet wurde, wird je nach Auftragslage in einen Wartezustand zurückgekehrt oder der nächste Auftrag 50 bis 56 geholt (Pfeil 136). Die Unterschiede beim Ausführen der Bearbeitungsprozesse 90 bis 94 werden anhand der Figuren 4A und 4B weiter unten erläutert.

Anhand der Figur 3 wird deutlich, daß die Kommunikation zwischen den Auftrags-Annahmeprozessen 70 bis 74 und den Bearbeitungsprozessen 90 bis 94 nur mit geringer Inanspruchnahme von Funktionen des Betriebssystems BS erfolgt.

Die Figuren 4A und 4B zeigen ein Flußdiagramm für ein Ausführungsbeispiel des Verfahrens nach der Erfindung mit den Verfahrensschritten, die durch die Bearbeitungs-Befehlsfolgen der Bearbeitungsprozesse 90 bis 94 definiert sind. Die jeweiligen Bearbeitungs-Befehlsfolgen enthalten im wesentlichen die gleichen Befehle in der gleichen Reihenfolge und sind in einem Speicher der Mehrprozessoranlage 10 abgelegt. Beim Betreiben der Mehrprozessoranlage 10 wird jedoch die Bearbeitungs-Befehlsfolge des zuletzt gestarteten Bearbeitungsprozesses 90 bis 94 anders als die zuvor gestarteten Bearbeitungs-Befehlsfolgen der anderen momentan ausgeführten Bearbeitungsprozesse 90 bis 94 ausgeführt. Die Unterschiede bezüglich der Ausführung sind in den Figuren 4A und 4B durch Strichlinien verdeutlicht.

In einem Schritt 200 wird einer der Bearbeitungsprozesse 90 bis 94 durch das Betriebssystem BS auf einem der Prozessoren MP1 bis MP3 gestartet (vgl. Figur 2, Pfeil 96). Dabei werden benötigte Variablen gelöscht, wie z.B. die weiter unten verwendete Variable n. Im nächsten Schritt 202 wird durch Lesen der Speicherzelle 58 festgestellt, ob der jeweils ausgeführte Bearbeitungsprozeß 90 bis 94 der zuletzt gestartete ist, wobei die anderen Bearbeitungsprozesse momentan ausgeführt werden müssen. Dies ist der Fall, wenn die Anzahl wartender Bearbeitungsprozesse 90 bis 94 gleich "1" ist. In diesem Fall wird in einem Schritt 204 der Name des zuletzt gestarteten Bearbeitungsprozesses 90 bis 94 in der Speicherzelle 60 vermerkt, indem ein jeweiliges Namensdatum in diese Speicherzelle 60 geschrieben wird. Beim Ausführen des Bearbeitungsprozesses 90 ist das der Wert "1" und beim Ausführen der Bearbeitungsprozesse 92 bzw. 94 ist es der Wert "2" bzw. "3". Anschließend wird das Verfahren mit Schritt 206 fortgesetzt. Der Schritt 206 wird unmittelbar nach dem Befehl 202 ausgeführt, falls der betrachtete Bearbeitungsprozeß 90 bis 94 nicht der zuletzt gestartete Bearbeitungsprozeß 90 bis 94 ist.

Im Schritt 206 wird die Anzahl der wartenden Bearbeitungsprozesse 90 bis 94 vermindert, indem der momentan in der Speicherzelle 58 gespeicherte Wert um den Wert "1" verringert wird. Die Mehrprozessoranlage 10 ist so konzipiert, daß nur jeweils ein Prozessor MP1 bis MP3 zwischen den Schritten 202 und 206 auf die Speicherzelle 58 und 60 zugreift. Konflikte durch das Zugreifen mehrerer Prozessoren MP1 bis MP3 werden somit vermieden.

Im Schritt 208 wird nach einem unbearbeiteten oder noch nicht vollständig bearbeiteten Auftrag 50 bis 56 im Speicher 16 gesucht. Anschließend wird im Schritt 210 festgestellt, ob ein Auftrag 50 bis 56 im Speicher 16 gefunden wurde. Ist dies nicht der Fall, so wird das Verfahren im weiter unten erläuterten Schritt 224 fortgesetzt. Wird jedoch ein Auftrag 50 bis 56 gefunden, so wird unmittelbar nach dem Schritt 210 der Schritt 212 ausgeführt.

Im Schritt 212 wird der gefundene Auftrag 50 bis 56 bearbeitet. Hierbei kann es aus den bereits genannten Gründen zu einer Unterbrechung der Bearbeitung kommen, so daß der Auftrag 50 bis 56 nur unvollständig bearbeitet wird.

Im Schritt 214 wird überprüft, ob der Auftrag 50 bis 56 vollständig bearbeitet worden ist. Ist dies nicht der Fall, so wird das Verfahren mit einer neuen Auftragssuche im Schritt 208 fortgesetzt. Ist der Auftrag 50 bis 56 jedoch vollständig bearbeitet worden, so wird unmittelbar nach dem Schritt 214 der Schritt 216 ausgeführt.

Im Schritt 216 wird geprüft, ob einer der beiden anderen Bearbeitungsprozesse 90 bis 94 im Wartezustand ist, indem der Wert der Speicherzelle 58 gelesen wird. Ist dieser Wert größer als Null, so gibt es einen Bearbeitungsprozeß 90 bis 94 im Wartezustand. In diesem Fall wird das Verfahren im Schritt 208 mit der Auftragssuche fortgesetzt. Befindet sich kein Bearbeitungsprozeß 90 bis 94 im Wartezustand, so wird unmittelbar nach dem Schritt 216 der Schritt 218 ausgeführt.

Im Schritt 218 wird geprüft, ob der ausgeführte Bearbeitungsprozeß 90 bis 94 der zuletzt gestartete Bearbeitungsprozeß 90 bis 94 ist. Dazu wird der momentane Wert der Speicherzelle 60 gelesen und mit dem Namen des betrachteten Bearbeitungsprozesses 90 bis 94 verglichen.. Hat der betrachtete Bearbeitungsprozeß 90 bis 94 einen anderen Namen, so wird das Verfahren im Schritt 208 mit der Auftragssuche fortgesetzt. Stimmt der Name des betrachteten Bearbeitungsprozesses 90 bis 94 jedoch mit dem momentanen Namen in der Speicherzelle 60 überein, so ist der betrachtete Bearbeitungsprozeß 90 bis 94 der zuletzt gestartete Bearbeitungsprozeß 90 bis 94. In diesem Fall wird das Verfahren mit Schritt 220 fortgesetzt.

Stimmt im Schritt 220 die Anzahl der seit dem Ausführen des Schritts 200 durch den betrachteten Bearbeitungsprozeß 90 bis 94 vollständig bearbeiteten Aufträge n mit der um eins verminderten vorgebenen Auftragsanzahl überein, so wird unmittelbar nach dem Schritt 220 der unten erläuterte Schritt 224 durchgeführt. Stimmt die Anzahl n nicht mit der um 1 verminderten vorgegebenen Auftragsanzahl überein, so wird unmittelbar nach dem Schritt 220 der Schritt 222 ausgeführt. Das bedeutet, daß eine Auftragsbearbeitungsschleife aus den Schritten 208 bis 222 nicht verlassen wird. Zu beachten ist, daß Schritt 220 nur dann ausgeführt wird, wenn der betrachtete Bearbeitungsprozeß 90 bis 94 der zuletzt gestartete Bearbeitungsprozeß 90 bis 94 ist.

Im Schritt 222 werden die Aufträge gezählt, die seit dem letzten Ausführen des Schritts 200 durch den betrachteten Bearbeitungsprozeß 90 bis 94 bearbeitet wurden. Hierzu wird eine jeweilige Zählvariable n, die im Schritt 200 den Wert "0" hat, um den Wert "1" erhöht. Nach dem Schritt 222 wird das Verfahren im bereits erläuterten Schritt 208 mit der Auftragssuche fortgesetzt. Der Schritt 220 wird aber nur dann ausgeführt, wenn der betrachtete Bearbeitungsprozeß 90 bis 94 der zuletzt gestartete Bearbeitungsprozeß 90 bis 94 ist.

Im Schritt 224 wird das Namensdatum in der Speicherzelle 60 gelöscht, indem der Wert "0" in sie geschrieben wird. Anschließend wird der Schritt 226 ausgeführt.

Im Verfahrensschritt 226 wird die Anzahl der Bearbeitungsprozesse 90 bis 94 im Wartezustand erhöht, indem der momentane Wert der Speicherzelle 58 um den Wert "1" erhöht wird. Anschließend wird das Verfahren im Schritt 228 vorläufig beendet (vgl. Figur 2, Pfeil 102). Der betrachtete Bearbeitungsprozeß 90 bis 94 befindet sich nun im Wartezustand (Schritt 230), bis ein erneuter Start im Schritt 200 erfolgt.

Die anhand der Figuren 4A und 4B beschriebenen Abläufe können auch gleichwertig mittels Entscheidungstabellen dargestellt werden. Gegenüber dem Flußdiagramm der Figuren 4A und 4B haben die Entscheidungstabellen den Vorteil, daß sie für jeden Bearbeitungsprozeß 90 bis 94 uneingeschränkt gelten.

Für das Verlassen des Wartepunktes (Schritt 200) gilt die folgende Tabelle:

Tabelle 1

| | | | |
|---|---|---|---|
| Anzahl wartender Bearbeitungsprozesse? Speicherzelle 58 | > 1 | = 1 | Schritt 202 |
| Eintrag des Namens des jeweiligen Bearbeitungsprozesses 90 bis 94 in die Speicherzelle 60 | Nein | Ja | Schritt 204 |
| Anzahl der wartenden Bearbeitungsprozesse in Speicherzelle 58 | -1 | -1 | Schritt 206 |
| Anzahl der bearbeiteten Aufträge n für jeweiligen Bearbeitungsprozeß 90 bis 94 | 0 | 0 | Schritt 208 |

Für die Auftragssuche im Schritt 208 und die folgenden Verfahrensschritte gilt die folgende Tabelle:

Tabelle 2

| | | | |
|---|---|---|---|
| Auftrag gefunden? | Ja | Nein | Schritt 210 |
| jeweiliger Bearbeitungsprozeß 90 bis 94 bearbeitet Auftrag | Ja | Nein | Schritt 212 |
| Anzahl der wartenden Bearbertungsprozesse 90 bis 94 in Speicherzelle 58 | - | +1 | Schritt 226 |
| Speicherzelle 60 (Namen) | - | 0 | Schritt 224 |
| Bearbeitungsprozeß in Wartezustand | Nein | Ja | Schritt 228, 230 |

Bei den beiden obigen Tabellen steht in der jeweils ersten Zeile eine Bedingung. Abhängig von dieser Bedingung werden die in den folgenden Zeilen der jeweiligen Tabelle beschriebenen Aktionen unterschiedlich durch den jeweiligen Bearbeitungsprozeß ausgeführt. Die letzte Spalte der beiden Tabellen enthält die Bezugzeichen der Schritte gemäß der Figuren 4A und 4B.

Für die Auftragsbeendigung gilt folgende dritte Tabelle:

Tabelle 3

| | | | | | | |
|---|---|---|---|---|---|---|
| Auftrag vollständig bearbeitet? | Ja | Ja | Ja | Ja | Nein | Schritt 214 |
| Anzahl wartender Bearbeitungsprozesse? Speicherzelle 58 | > 0 | 0 | 0 | 0 | - | Schritt 216 |
| eigener Name gespeichert in Speicherzelle 60 | - | Nein | Ja | Ja | - | Schritt 218 |
| Anzahl der bearbeiteten Aufträge n für jeweiligen Bearbeitungsprozeß | - | - | n-1 | < (n-1) | - | Schritt 220 |
| Anzahl der wartenden Bearbeitungsprozesse 90 bis 94 in Speicherzelle 58 | - | - | +1 | - | - | Schritt 226 |
| Bearbeitungsprozeß 90 bis 94 betrit Wartezustand | Nein | Nein | Ja | Nein | Nein | Schritt 228, 230 |
| Speicherzelle 60 (Namen) | - | - | 0 | - | - | Schritt 224 |
| Auftragssuche | Ja | Ja | Nein | Ja | Ja | Schritt 208 |
| Anzahl der bearbeiteten Auftrage n für jeweiligen Bearbeitungsprozeß | - | - | - | +1 | - | Schritt 222 |

In dieser Tabelle stehen in den ersten vier Zeilen vier Bedingungen. Je nachdem, ob diese Bedingungen erfüllt sind, werden die Aktionen der restlichen Zeilen der Tabelle unterschiedlich ausgeführt.

Die Symbole in den obigen Tabellen haben in den Bedingungszeilen folgende Bedeutung:

| - | Bedingung ist ohne Bedeutung |
|---|---|
| > x | abgefragter Wert ist größer als x |
| = x | abgefragter Wert ist gleich x |
| < x | abgefragter Wert ist kleiner als x. |

In den Aktionszeilen der obigen Tabellen werden folgende Symbole verwendet:

| - | Wert bleibt unverändert |
|---|---|
| +1 | Wert wird um 1 erhöht |
| -1 | wert wird um 1 vermindert |
| x | Wert wird auf x gesetzt. |

Die Veränderung der Speicherzellen 58 und 60 erfolgt immer atomar, d.h. für beide Werte faktisch gleichzeitig. Der Zähler n wird für jeden Bearbeitungsprozeß 90 bis 94 jeweils lokal gesetzt.

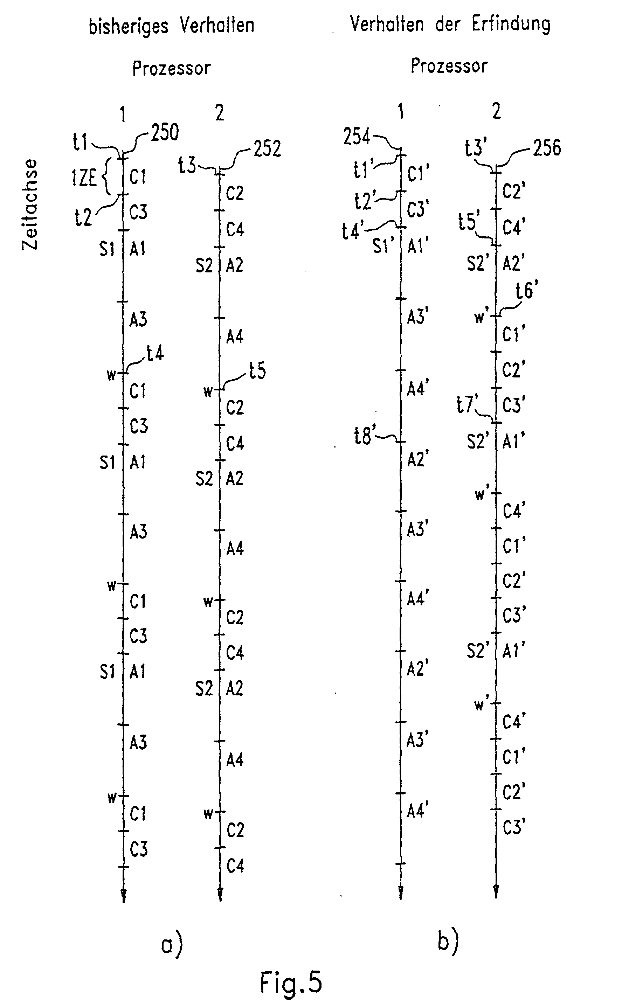

Figur 5 zeigt schematisch das Zeitverhalten beim Betreiben einer Prozessoranlage mit nur zwei Prozessoren, zwei Bearbeitungsprozessen und vier Auftrags-Annahmeprozessen. Teil a der Figur 5 zeigt das Zeitverhalten ohne Verwenden des erfindungsgemäßen Verfahrens. Teil b der Figur 5 zeigt das Zeitverhalten unter'Einsatz des erfindungsgemäßen Verfahrens. Es wird angenommen, daß alle Auftrags-Annahmeprozesse eine Prozessorzuteilung von einer Zeiteinheit ZE brauchen, um einen Auftrag entgegenzunehmen und einen neuen Auftrag bereitzustellen. Ein Bearbeitungsprozeß benötigt für die Ausführung eines Auftrags eine Prozessorzuteilung von zwei Zeiteinheiten ZE. Die Auftrags-Annahmeprozesse werden vom Betriebssystem BS ausgewählt, da sie eine höhere Priorität haben und insofern vorrangig vom Betriebssystem ausgewählt werden, auch wenn zwischenzeitlich schon Wecksignale an die Bearbeitungsprozesse ergangen sind.

In den Teilen a und b der Figur 5 sind vier Zeitstrahlen 250 bis 256 dargestellt. Die Zeitstrahlen 250 und 254 beziehen sich auf die Vorgänge auf dem ersten Prozessor und die Zeitstrahlen 252 und 256 auf die Vorgänge auf dem zweiten Prozessor. Auf dem Zeitstrahl 250 ist ein Zeitpunkt t1 und ein nach diesem liegender Zeitpunkt t2 dargestellt. Die Zeit zwischen den Zeitpunkten t1 und t2 ist: genau eine Zeiteinheit ZE. In den Teilen a und b der Figur 5 werden unbearbeitete Aufträge C1, C2, C3 bzw. C4 und daraus erzeugten bearbeiteten Aufträge A1, A2, A3 bzw. A4 dargestellt. Außerdem werden Wartezustände w dargestellt.

Teil a der Figur 5 zeigt die Verhältnisse auf den beiden Prozessoren ausgehend von einer Ausgangssituation, in der vier Aufträge C1 bis C4 geringfügig zeitversetzt erzeugt werden. Die Aufträge C1 und C3 werden durch einen Auftrags-Annahmeprozeß auf dem ersten Prozessor angenommen, und die Aufträge C2 und C4 werden durch den anderen Auftrags-Annahmeprozeß auf dem zweiten Prozessor angenommen. Anschließend wird auf dem ersten Prozessor ein Bearbeitungsprozeß S1 ausgeführt, der zwei Zeiteinheiten ZE benötigt, um den Auftrag C1 zu bearbeiten und den bearbeiteten Auftrag A1 zu erzeugen (vgl. Zeitstrahl 250). Anschließend sucht der Bearbeitungsprozeß S1 nach unbearbeiteten Aufträgen und findet den Auftrag C3. Der Auftrag C3 wird wiederum in zwei Zeiteinheiten ZE von dem Bearbeitungsprozeß S1 bearbeitet. Danach sucht der Bearbeitungsprozeß S1 zu einem Zeitpunkt t4 nach unbearbeiteten Aufträgen. Da zum Zeitpunkt t4 jedoch keine unbearbeiteten Aufträge mehr in der Mehrprozessoranlage vorhanden sind, nimmt der Bearbeitungsprozeß S1 einen Wartezustand w ein.

Der zweite Prozessor nimmt durch Ausführen des anderen Auftrags-Annahmeprozesses, beginnend zu einem Zeitpunkt t3, der zwischen dem Zeitpunkt t1 und. dem Zeitpunkt t2 liegt, den Auftrag C2 und anschließend den Auftrag C4 entgegen und benötigt hierfür jeweils eine Zeiteinheit ZE. Danach wird auf dem zweiten Prozessor ein Bearbeitungsprozeß S2 ausgeführt, der den Auftrag C2 bearbeitet und den bearbeiteten Auftrag A2 erzeugt. Anschließend sucht der Bearbeitungsprozeß S2 nach unbearbeiteten Aufträgen und findet den Auftrag C4. Dieser Auftrag C4 wird bearbeitet und der bearbeitete Auftrag A4 erzeugt. Danach sucht der Bearbeitungsprozeß S2 zu- einem Zeitpunkt t5 nach unbearbeiteten Aufträgen. Da jedoch keine unbearbeiteten Aufträge mehr vorhanden sind, nimmt der Bearbeitungsprozeß S2 einen Wartezustand w zum Zeitpunkt t5 ein (vgl. Zeitstrahl 252).

Da auch die beiden Prozessoren in einem Wartezustand w sind, können die Auftrags-Annahmeprozesse erneut ausgeführt werden, um neue Aufträge C1 bis C4 anzunehmen. Bei der Annahme der neuen Aufträge C1 bis C4 werden die bearbeiteten Aufträge A1 bis A4 zurückgegeben. Die oben beschriebenen Vorgänge wiederholen sich anschließend.

Im Teil a der Figur 5 gibt es sechs Wartezustände w und zwölf Wechsel zwischen Auftragsannahme- und Bearbeitungsprozessen bzw. zwischen Bearbeitungs- und Auftragsannahmeprozessen auf den beiden Prozessoren.

Teil b der Figur 5 zeigt die Zeitverhältnisse unter Einsatz des erfindungsgemäßen Verfahrens. Zu einem Zeitpunkt t1' beginnend werden wiederum vier Aufträge C1' bis C4' etwas zeitversetzt erzeugt. Die Aufträge C1' und C3' werden in der oben beschriebenen Weise auf dem ersten Prozessor angenommen. Anstelle der Zeiten t1, t2 bzw. t3 treten Zeiten t1', t2' bzw. t3'. Die Aufträge C2' und C4' werden ebenfalls in der oben beschriebenen Weise auf dem zweiten Prozessor angenommen. Anschließend wird zu einem Zeitpunkt t4' der Bearbeitungsprozeß S1' auf dem ersten Prozessor gestartet und mit der Auftragsbearbeitung begonnen, bis keine Aufträge mehr im Speicher der Mehrprozessoranlage vorhanden sind. Auf dem zweiten Prozessor wird zu einem Zeitpunkt t5', der nach dem Zeitpunkt t4' liegt, ein zweiter Bearbeitungsprozeß S2' begonnen. Da der Bearbeitungsprozeß S2' der zuletzt gestartete Bearbeitungsprozeß ist, führt er nur einen Auftrag C2' aus, wobei ein bearbeiteter Auftrag A2' erzeugt wird. Anschließend nimmt der Bearbeitungsprozeß S2' einen Wartezustand w' zu einem Zeitpunkt t6' ein. Auf dem zweiten Prozessor werden nach einem Prozeßwechsel durch den bereits auf diesem ausgeführten Auftrags-Annahmeprozeß neue Aufträge C1' bis C3' entgegengenommen. Zu einem Zeitpunkt t7' wird danach auf dem zweiten Prozessor der zuvor ausgeführte Bearbeitungsprozeß S2' erneut ausgeführt, der einen neuen Auftrag C1' bearbeitet und daraus einen neuen bearbeiteten Auftrag A1' erzeugt.

Der Bearbeitungsprozeß S1' findet nach dem Bearbeiten der Aufträge C1' und C3' bei seiner Auftragssuche den noch unbearbeiteten Auftrag C4', so daß er nicht in einen Wartezustand kommt. Nach dem Ausführen des Auftrags C4' sind bereits neue Aufträge C2' und C3' vorhanden. Somit nimmt der Bearbeitungsprozeß S1' zu einem Zeitpunkt t8' wiederum keinen Wartezustand ein. Der Bearbeitungsprozeß S1' führt den neuen Auftrag C2' aus, wobei der neues bearbeitete Auftrag A2' entsteht.

Durch die Erfindung wird bei diesem Beispiel erreicht, daß der Bearbeitungsprozeß S1' dauernd auf dem ersten Prozessor abläuft. Nur auf dem zweiten Prozessor kommt es zu Wechseln zwischen Auftrags-Annahmeprozessen und Bearbeitungsprozessen. Insgesamt sind im Teil b der Figur 5 nur drei Wartezustände w' vorhanden. Außerdem finden nur sieben Wechsel zwischen Auftragsannahme- und Bearbeitungsprozessen auf den Prozessoren statt. Durch die verminderte Anzahl von Wartezuständen und Prozeßwechseln können die Zwischenspeicher der Prozessoren besser genutzt werden. Außerdem entfallen Maßnahmen für die Vor- und Nachbereitung eines Prozeßwechsels. Dadurch verkürzt sich die Zeit für die Auftragsannahme und die Auftragsbearbeitung (im Teil b der Figur 5 nicht dargestellt). Eine Auftragsannahme benötigt durch die Erfindung weniger als eine ZE, und eine Auftragsbearbeitung benötigt weniger als zwei ZE. Demzufolge können durch Verwenden des Vefahrens nach der Erfindung mehr Aufträge in derselben Zeit bearbeitet werden. Zusätzlich verkürzt sich die Zeit von der Auftragsannahme bis zur Auftragsbearbeitung.

Die Anzahl von Aufträgen, die durch den-zuletzt gestarteten Bearbeitungsprozeß ausgeführt werden, bevor dieser in den Wartezustand geht, läßt sich durch folgende Formel abschätzen:

$$n = RNDU(1/\{RNDO(SV*AnzMP) - (SV*AnzMP)\})$$

Wobei n die Auftragsanzahl, AnzMP die Anzahl der Prozessoren in der Mehrprozessoranlage und wobei SV ein Verhältnis ist, das sich aus der Division von Zeit für das Abarbeiten eines Auftrags durch Summe der Zeit für die Entgegennahme eines Auftrags und der Zeit für dessen Abarbeiten ergibt. RNDO bedeutet ein Aufrunden auf die nächstliegende ganze Zahl bezüglich des folgenden Werts in Klammern; RNDU bedeutet ein Abrunden auf die nächstliegende ganze Zahl bezüglich des in Klammern folgenden Wertes.

Für das Beispiel in der Figur 5 berechnet sich der Wert SV zu 0,666. Der Wert von AnzMP ist "2". Somit berechnet sich ein Bearbeitungsprozeßbedarf zu 1,333. Bereitgestellt werden muß aber eine ganze Zahl von Bearbeitungsprozessen. Durch Aufrunden auf die nächstliegende ganze Zahl, in der obigen Formel durch RNDO dargestellt, ergibt sich der Wert "2". Das bedeutet, daß 0,666 Bearbeitungsprozesse theoretisch zuviel vorhanden sind. Ein geeigneter Wert für n ergibt sich aus dem Kehrwert des überschüssigen Anteils und einer anschließenden Abrundung auf die nächstliegende ganze Zahl. Für das Beispiel der Figur 5 ergibt sich für n der Wert 1.

**Patentansprüche**

1. Verfahren zum Betreiben einer Mehrprozessor-Datenverarbeitungsanlage (10) mit mindestens zwei Prozessoren (MP1 bis MP3)
   bei dem die folgenden Schritte ausgeführt werden,

   a) über eine Vielzahl von an die Mehrprozessoranlage (10) angeschlossenen Eingabegeräten (22 bis 26) zur Dateneingabe werden laufend Aufträge (50 bis 56) erzeugt, die auftragsbezogene Daten enthalten,

   b) die erzeugten Aufträge (50 bis 56) werden in mindestens einem durch eine Auftragsannahme-Befehlsfolge definierten Annahmeprozeß (70 bis 74) auf mindestens einem der Prozessoren (MP1 bis MP3) von der Mehrprozessoranlage (10) entgegengenommen und in einem Auftragsspeicher (16) der Mehrprozessoranlage (10) gespeichert,

c) auf mindestens einem Prozessor (MP1 bis MP3) werden in ersten Bearbeitungsprozessen (90 bis 94) Aufträge (50 bis 56) beginnend zu einem ersten Zeitpunkt (t4') so lange bearbeitet, wie unbearbeitete Aufträge (50 bis 56) im Auftragsspeicher (16) gespeichert sind,

d) auf einem weiteren Prozessor (MP1 bis MP3) werden in einem weiteren zweiten Bearbeitungsprozeß (90 bis 94) beginnend zu einem zweiten Zeitpunkt (t5') Aufträge (50 bis 56) so lange bearbeitet, bis eine vorgegebene Auftragsanzahl von gespeicherten Aufträgen (50 bis 56) zumindest teilweise bearbeitet wurde, wobei die ersten Bearbeitungsprozesse und der zweite Bearbeitungsprozeß (90 bis 94) durch erste und zweite Bearbeitungs-Befehlsfolgen definiert sind,

e) nach Beenden jedes Bearbeitungsprozesses (90 bis 94) nimmt der jeweilige Bearbeitungsprozeß (90 bis 94) einen Wartezustand (w, w') ein, in welchem beim Erzeugen weiterer Aufträge (50 bis 56) auf dem jeweiligen Prozessor (MP1 bis MP3) der Annahmeprozeß (70 bis 74) erneut ausgeführt werden kann.

2. Verfahren nach Anspruch 1, **dadurch gekennzeichnet, daß** der zweite Zeitpunkt (t5') nach dem ersten Zeitpunkt (t4') liegt, wobei die erste Bearbeitungs-Befehlfolge und die zweite Bearbeitungs-Befehlsfolge im wesentlichen gleich aufgebaut sind.

3. Verfahren nach einem der vorhergehenden Ansprüche, **dadurch gekennzeichnet, daß** mindestens einer der Prozessoren (MP1 bis MP3) beim Ausführen des jeweiligen Bearbeitungsprozesses (90 bis 94) oder des jeweiligen Annahmeprozesses (70 bis 74) auf einen diesem Prozessor zugeordneten schnellen Zwischenspeicher (CACHE1 bis CACHE3) zugreift.

4. Verfahren nach Anspruch 3, **dadurch gekennzeichnet, daß** bei Verwendung von den Prozessoren (MP1 bis MP3) zugeordneten, schnellen Zwischenspeichern (CACHE1 bis CACHE3) durch Schreibzugriffe bedingte Änderungen der Daten jeweils auch in die übergeordneten langsameren Speicher (16) übertragen werden.

5. Verfahren nach einem der vorhergehenden Ansprüche, **dadurch gekennzeichnet, daß** die Mehrprozessoranlage (10) eine erste Speicherzelle (58) enthält, die von allen Prozessoren (MP1 bis MP3) beschrieben und gelesen werden kann,
daß in die erste Speicherzelle (58) beim Start eines der Bearbeitungsprozesse (90 bis 94) ein Namensdatum geschrieben wird, das den jeweiligen Bearbeitungsprozeß (90 bis 94) nach Art eines Namens eindeutig kennzeichnet, und
daß anhand des Namensdatums beim Ausführen der Bearbeitungsprozesse (90 bis 94) der zuletzt gestartete Bearbeitungsprozeß (90 bis 94) ermittelt wird.

6. Verfahren nach Anspruch 5, **dadurch gekennzeichnet, daß** die Mehrprozessoranlage (10) eine zweite Speicherzelle (60) enthält, auf die von allen Prozessoren (MP1 bis MP3) zugegriffen werden kann,
daß ein in der zweiten Speicherzelle (60) aktuell gespeicherter Zählerwert beim Start eines der Bearbeitungsprozesse (90 bis 94) um einen vorgegebenen Wert erniedrigt wird,
und daß der Zählerwert beim Beenden eines der Bearbeitungsprozesse (90 bis 94) um den vorgegebenen Wert erhöht wird.

7. Verfahren nach Anspruch 6, **dadurch gekennzeichnet, daß** das Namensdatum nur dann in die erste Speicherzelle (58) geschrieben wird, wenn in der zweiten Speicherzelle (60) ein Zählerwert gespeichert: ist, der anzeigt, daß der erste Bearbeitungsprozeß (90 bis 94) ausgeführt wird.

8. Verfahren nach einem der Ansprüche 5 bis 7, **dadurch gekennzeichnet, daß** nach dem Zugriff eines der Prozessoren (z.B. MP1) auf die erste Speicherzelle (58) oder die zweite Speicherzelle (60) ein Zugriff der anderen Prozessoren (MP2 bis MP3) auf die erste Speicherzelle (58) und/oder die zweite Speicherzelle (60) für eine vorgegebene Zeit verhindert wird,
wobei die vorgegebene Zeit mindestens so bemessen ist, daß der eine Prozessor (MP1) auch auf die andere Speicherzelle (58, 60) zugreifen kann.

9. Verfahren nach einem der vorhergehenden Ansprüche, **dadurch gekennzeichnet, daß** bei einem Vergleich der Anzahl der durch den zweiten Bearbeitungsprozeß (90 bis 94) bearbeiteten Aufträge (50 bis 56) mit der vorgegebenen Auftragsanzahl nur die Aufträge (50 bis 56) berücksichtigt werden, die vollständig durch diesen Bearbeitungsprozeß (90 bis 94) bearbeitet worden sind.

10. Verfahren nach einem der Ansprüche 5 bis 9, **dadurch gekennzeichnet, daß** beim Beenden eines der Bearbeitungsprozesse (90 bis 94) das in der ersten Speicherzelle (58) momentan gespeicherte Namensdatum gelöscht wird.

11. Verfahren nach einem der vorhergehenden Ansprüche, **dadurch gekennzeichnet, daß** für die vorgegebene Auftragsanzahl die folgende Beziehung gilt:

$$n = RNDU(1/\{RNDO(SV*AnzMP) - (SV*AnzMP)\},$$

wobei n die Auftragsanzahl ist, AnzMP die Anzahl der Prozessoren (MP1 bis MP3) in der Mehrprozessoranlage (10) ist, auf denen Bearbeitungsprozesse (90 bis 94) gleichzeitig ausgeführt werden können,
SV ein Verhältnis ist, das sich aus der Division der Zeit für das Abarbeiten eines Auftrags (50 bis 56) durch die Summe der Zeit für die Entgegennahme eines Auftrags (50 bis 56)und der Zeit für dessen Abarbeiten ergibt,
RNDO ein Aufrunden auf die nächstliegende ganze Zahl ist,
und wobei RNDU ein Abrunden auf die nächstliegende ganze Zahl ist.

12. Mehrprozessor-Datenverarbeitungsanlage (10), insbesondere zum Durchführen des Verfahrens nach einem der vorhergehenden Ansprüche,
mit mindestens zwei Prozessoren (MP1 bis MP3),
einer Vielzahl von an die Mehrprozessoranlage (10) angeschlossenen Eingabegeräten (22 bis 26) zur Dateneingabe,
einem Auftragsspeicher (16) zum Speichern von Aufträgen (50 bis 56), die durch die Eingabegeräte (22 bis 26) erzeugt werden und auftragsbezogene Daten enthalten,
einem Befehlsspeicher (14) zum Speichern mindestens einer Auftragsannahme-Befehlsfolge und mindestens zweier Bearbeitungs-Befehlsfolgen,
wobei beim Ausführen eines durch die Auftragsannahme-Befehlsfolge definierten Annahmeprozesses (70 bis 74) auf mindestens einem der Prozessoren (MP1 bis MP3) die Aufträge (50 bis 56) von der Mehrprozessoranlage (10) entgegengenommen und im Auftragsspeicher (16) gespeichert werden,
beim Ausführen mindestens eines durch die Bearbeitungs-Befehlsfolge definierten ersten Bearbeitungsprozesses (90 bis 94) durch die Prozessoren (MP1 bis MP3) beginnend zu einem ersten Zeitpunkt (t4') diese Bearbeitungsprozesse (90 bis 94) solange ausgeführt werden, wie unbearbeitete Aufträge (50 bis 56) im Auftragsspeicher (16) gespeichert sind,
beim Ausführen eines durch eine andere Bearbeitungs-Befehlsfolge definierten zweiten Bearbeitungsprozesses (90 bis 94) durch einen weiteren Prozessor (z.B. MP3) beginnend zu einem zweiten Zeitpunkt (t5') dieser Bearbeitungsprozeß (90 bis 94) solange ausgeführt wird, bis eine vorgegebene Auftragsanzahl von gespeicherten Aufträgen (50 bis 54) zumindest teilweise bearbeitet wurde,
und wobei beim Beenden eines der Bearbeitungsprozesse (90 bis 94) dieser einen Wartezustand (w, w') einnimmt, in welchem beim Erzeugen weiterer Aufträge (50 bis 56) auf dem jeweiligen Prozessor (MP1 bis MP3) der Annahmeprozeß (70 bis 74) erneut ausgeführt werden kann.

## Claims

1. Method for operating a multiprocessor data processing installation (10) having at least two processors (MP1 to MP3),
in which the following steps are carried out:

   a) a multiplicity of input units (22 to 26) for data input which are connected to the multiprocessor installation (10) are used for continually producing jobs (50 to 56) containing job-related data,

   b) the jobs (50 to 56) produced are received by the multiprocessor installation (10) in at least one acceptance process (70 to 74), defined by a job-acceptance instruction sequence, on at least one of the processors (MP1 to MP3) and are stored in a job memory (16) in the multiprocessor installation (10),

c) at least one processor (MP1 to MP3) processes jobs (50 to 56) in first processing processes (90 to 94), starting at a first time (t4'), for as long as unprocessed jobs (50 to 56) are stored in the job memory (16),

d) another processor (MP1 to MP3) processes jobs (50 to 56) in another, second processing process (90 to 94), starting at a second time (t5'), until a prescribed number of jobs from stored jobs (50 to 56) has been processed at least in part, the first processing processes and the second processing process (90 to 94) being defined by first and second processing instruction sequences,

e) when each processing process (90 to 94) has ended, the respective processing process (90 to 94) adopts a waiting state (w, w') in which the respective processor (MP1 to P3) can execute the acceptance process (70 to 74) again if further jobs (50 to 56) are produced.

2. Method according to Claim 1, **characterized in that** the second time (t5') comes after the first time (t4'), the first processing instruction sequence and the second processing instruction sequence having essentially the same structure.

3. Method according to one of the preceding claims, **characterized in that** at least one of the processors (MP1 to MP3) accesses a fast buffer (CACHE1 to CACHE3) associated with this processor when executing the respective processing process (90 to 94) or the respective acceptance process (70 to 74).

4. Method according to Claim 3, **characterized in that**, when fast buffers (CACHE1 to CACHE3) associated with the processors (MP1 to MP3) are used, changes in the data which are brought about by write access operations are respectively also transferred to the superordinate slower memories (16).

5. Method according to one of the preceding claims, **characterized in that** the multiprocessor installation (10) contains a first memory cell (58) to which/from which information can be written and read by all the processors (MP1 to MP3),
**in that**, at the start of one of the processing processes (90 to 94), the first memory cell (58) has a name data item written to it which clearly identifies the respective processing process (90 to 94) in the manner of a name, and
**in that** the name data item is used to ascertain the last processing process (90 to 94) started when the processing processes (90 to 94) are executed.

6. Method according to Claim 5, **characterized in that** the multiprocessor installation (10) contains a second memory cell (60) which can be accessed by all the processors (MP1 to MP3),
**in that** a counter value currently stored in the second memory cell (60) is reduced by a prescribed value when one of the processing processes (90 to 94) starts,
and **in that** the counter value is increased by the prescribed value when one of the processing processes (90 to 94) ends.

7. Method according to Claim 6, **characterized in that** the name data item is written to the first memory cell (58) only if the second memory cell (60) stores a counter value which indicates that the first processing process (90 to 94) is being executed.

8. Method according to one of Claims 5 to 7, **characterized in that**, when of the processors (e.g. MP1) has accessed the first memory cell (58) or the second memory cell (60), the other processors (MP2 to MP3) are prevented from accessing the first memory cell (58) and/or the second memory cell (60) for a prescribed time,
the prescribed time being proportioned to be at least such that the one processor (MP1) can also access the other memory cell (58, 60).

9. Method according to one of the preceding claims, **characterized in that** a comparison between the number of jobs (50 to 56) processed by the second processing process (90 to 94) and the prescribed number of jobs takes into account only the jobs (50 to 56) which have been processed fully by this processing process (90 to 94).

10. Method according to one of claims 5 to 9, **characterized in that**, when one of the processing processes (90 to 94) ends, the name data item currently stored in the first memory cell (58) is erased.

11. Method according to one of the preceding claims, **characterized in that** the following relationship applies to the prescribed number of jobs:

$$n = RNDU(1/\{RNDO(SV*AnzMP) - (SV*AnzMP)\}),$$

where n is the number of jobs, AnzMP is the number of processors (MP1 to MP3) in the multiprocessor installation (10) which are able to execute processing processes (90 to 94) simultaneously,
SV is a ratio obtained by dividing the time for executing a job (50 to 56) by the sum of the time for receiving a job (50 to 56) and the time for executing said job,
RNDO is a rounding-up to the nearest integer,
and where RNDU is a rounding-down to the nearest integer.

12. Multiprocessor data processing installation (10), in particular for carrying out the method according to one of the preceding claims,
having at least two processors (MP1 to MP3),
a multiplicity of input units (22 to 26) for data input which are connected to the multiprocessor installation (10),
a job memory (16) for storing jobs (50 to 56) which are produced by the input units (22 to 26) and contain job-related data,
an instruction memory (14) for storing at least one job-acceptance instruction sequence and at least two processing instruction sequences,
where the execution of an acceptance process (70 to 74), defined by the job-acceptance instruction sequence, on at least one of the processors (MP1 to MP3) involves the jobs (50 to 56) being received by the multiprocessor installation (10) and being stored in the job memory (16),
the execution of at least one first processing process (90 to 94) defined by the processing instruction sequence involves the processors (MP1 to MP3) executing these processing processes (90 to 94), starting at a first time (t4'), for as long as unprocessed jobs (50 to 56) are stored in the job memory (16),
the execution of a second processing process (90 to 94) defined by another processing instruction sequence involves another processor (e.g. MP3) executing this processing process (90 to 94), starting at a second time (t5'), until a prescribed number of jobs from stored jobs (50 to 54) has been processed at least in part,
and where, when one of the processing processes (90 to 94) ends, it adopts a waiting state (w, w') in which the respective processor (MP1 to MP3) can execute the acceptance process (70 to 74) again if further jobs (50 to 56) are produced.

## Revendications

1. Procédé pour exploiter un système (10) multiprocesseur de traitement de données comportant au moins deux processeurs (MP1 à MP3),
dans lequel on exécute les étapes suivantes,

a) on produit par l'intermédiaire d'une pluralité d'appareils (22 à 26) d'entrée de données, raccordés au système (10) multiprocesseur, en continu des missions (50 à 56) qui contiennent des données relatives aux missions,
b) on reçoit les missions (50 à 56) produites, au cours d'au moins une opération (70 à 74) de prise en charge définie par une séquence d'instructions de prise en charge de missions, sur au moins l'un des processeurs (MP1 à MP3) du système (10) multiprocesseur et on les met en mémoire dans une mémoire (16) de missions du système (10) multiprocesseur,
c) sur au moins un processeur (MP1 à MP3), on traite, dans des premières opérations (90 à 94) de traitement des missions (50 à 56), en commençant à un premier instant (t4') aussi longtemps que des missions (50 à 56) non traitées sont mémorisées dans la mémoire (16) de missions,
d) sur un autre processeur (MP1 à MP3), on traite, dans une deuxième opération (90 à 94) supplémentaire de traitement des missions (50 à 56), en commençant à un deuxième instant (t5') jusqu'à ce qu'un nombre prescrit de missions (50 à 56) mémorisées aient été au moins en partie traitées, les premières opérations de traitement et les deuxièmes opérations (90 à 94) de traitement étant définies par des premières et des secondes séquences d'instruction de traitement,
e) après achèvement de chaque opération (90 à 94) de traitement, l'opération (90 à 94) de traitement associée adopte un état (w, w') d'attente, dans lequel l'opération (70 à 74) de prise en charge peut être à nouveau effectuée lorsque des missions (50 à 56) supplémentaires sont produites sur le processeur (MP1 à MP3) associé.

2. Procédé suivant la revendication 1, **caractérisé en ce que** le deuxième instant (t5') est postérieur au premier instant (t4'), la première séquence d'instructions de traitement et la deuxième séquence d'instructions de traitement étant constituées de manière sensiblement identique.

3. Procédé suivant l'une des revendications précédentes, **caractérisé en ce qu'**au moins l'un des processeurs (MP1 à MP3) accède, lors de l'exécution de l'opération (90 à 94) de traitement associée ou de l'opération (70 à 74) de prise en charge associée, à une mémoire (CACHE1 à CHACHE3) intermédiaire rapide associée à ce processeur.

4. Procédé suivant la revendication 3, **caractérisé en ce que**, lorsque l'on utilise des mémoires (CACHE1 à CACHE3) intermédiaires rapides, associées aux processeurs (MP1 à MP3), les modifications des données dues à des accès d'écriture Dont transmises respectivement aussi à la mémoire (16) de rang supérieur plus lente.

5. Procédé suivant l'une des revendications précédentes, **caractérisé en ce que** le système (10) multiprocesseur contient une première cellule (58) de mémoire, dans laquelle tous les processeurs (MP1 à MP3) peuvent écrire et qui peut être lue par tous les processeurs (MP1 à MP3),
   **en ce que**, il est écrit dans la première cellule (58) de mémoire, au départ de l'une des opérations (90 à 94) de traitement, une donnée de nom qui **caractérise** de manière non équivoque, à la façon d'un nom, l'opération (90 à 94) le traitement respective, et
   **en ce que**, à l'aide de la donnee de nom, une opération (90 à 94) de traitement qui a été commencée en dernier est déterminée lors de l'exécution des opérations (90 à 94) de traitement.

6. Procédé suivant la revendication 5, **caractérisé en ce que** le système (10) multiprocesseur contient une deuxième cellule (60) de mémoire à laquelle on peut accéder par tous les processeurs (MP1 à MP3),
   **en ce qu'**une valeur de compteur mémorisée sur le moment dans la deuxième cellule (60) de mémoire est, au départ de l'une des opérations (90 à 94) de traitement, diminuée d'une valeur prescrite,
   et **en ce que** la valeur de compteur est augmentée de la valeur prescrite lors de l'achèvement de l'une des opérations (90 à 94) de traitement.

7. Procédé suivant la revendication 6, **caractérisé en ce que** la donnée de nom n'est écrite dans la première cellule (58) de mémoire que s'il est écrit dans la deuxième cellule (60) de mémoire une valeur de compteur qui indique que la première opération (90 à 94) de traitement a été exécutée.

8. Procédé suivant l'une des revendications 5 à 7, **caractérisé en ce que**, après l'accès de l'un des processeurs (par exemple, MP1) à la première cellule (58) de mémoire ou à la deuxième cellule (60) de mémoire, un accès de l'autre processeur (MP2 à MP3) à la première cellule (58) de mémoire et/ou à la deuxième cellule (56) de mémoire est empêché pour une durée prescrite,
   la durée prescrite étant prévue au moins pour que le un processeur (MP1) puisse accéder aussi à l'autre cellule (58, 60) de mémoire.

9. Procédé suivant l'une des revendications précédentes, **caractérisé en ce que**, lors d'une comparaison du nombre des missions (50 à 56) traitées par la deuxième opération (90 à 94) de traitement au nombre de missions prescrites, on ne prend en compte que les missions (50 à 56) qui ont été traitées complètement par cette opération (90 à 94) de traitement.

10. Procédé suivant l'une des revendications 5 à 9, **caractérisé en ce que**, à l'achèvement de l'une des opérations (90 à 94) de traitement, la donnée de nom mise en mémoire de manière provisoire dans la première cellule (58) de mémoire est effacée.

11. Procédé suivant l'une des revendications précédentes, **caractérisé en ce que** l'on a pour le nombre de missions traitées la relation suivante :

$$n = RNDU(1/\{RNDO(SV*AnzMF) - (sv*AnzMP\},$$

n étant le nombre de missions, AnzMP étant le nombre des processeurs (MP1 à MP3) dans le système (10) multiprocesseur sur lesquels les opérations (90 à 94) de traitement peuvent être exécutées en même temps, SV étant un quotient qui s'obtient en divisant la durée pour le traitement complet d'une mission (50 à 56) par la somme du temps pour la prise en charge d'une mission (50 à 56) et du temps pour son traitement complet,
RNDO est un arrondi au nombre entier supérieur le plus proche,

et RNDU est un arrondi au nombre entier inférieur le plus proche.

12. Système (10) multiprocesseur de traitement de données, notamment pour exécuter le procédé suivant l'une des revendications précédentes,

- comportant au moins deux processeurs (MP1 à MP3),
- une pluralité d'appareils (22 à 26) d'entrée de données raccordés au système (10) multiprocesseur,
- une mémoire (16) de missions pour mettre en mémoire des missions (50 à 56) qui sont produites par les appareils (22 à 26) d'entrée et qui contiennent des données relatives aux missions,
- une mémoire (14) d'instructions pour mettre en mémoire au moins une séquence d'instructions de prise en charge de missions et au moins deux séquences d'instructions de traitement,
- les missions (50 à 56) étant, lors de l'exécution, sur au moins l'un des processeurs (MP1 à MP3), d'une opération (70 à 74) de prise en charge, définis par la séquence d'instructions de prise en charge de missions, prise en charge par le système (10) multiprocesseur et mise en mémoire dans la mémoire (16) de missions,
- lors de l'exécution, par les processeurs (MP1 à MP3), d'au moins une première opération (90 à 94) de traitement définie par la séquence d'instructions de traitement, cette opération (90 à 94) de traitement commençant à un premier instant (t4') étant exécutée aussi longtemps que des instructions (50 à 56) non traitées sont en mémoire dans la mémoire (16) de missions,
- lors de l'exécution, par un autre processeur (par exemple, MP3) d'une deuxième opération (90 à 94) de traitement définie par une autre séquence d'instructions de traitement, cette opération (90 à 94) de traitement, commençant à un deuxième instant (t5'), est exécutée jusqu'à ce qu'un nombre prescrit de missions (50 à 54) mémorisées ait été au moins en partie traitées,
- et, à l'achèvement de l'une des opérations (90 à 94) de traitement, cette dernière adoptant un état (w, w') d'attente, dans lequel le processus (70 à 74) de prise en charge peut, en cas de production de missions (50 à 56) supplémentaires, être à nouveau exécuté sur le processeur (MP1 à MP3) respectif.

Fig.1

Fig.2

Fig.3

200 — Start
durch BS

Warten beim
Betriebssystem (BS)

230

202 —

Ist dies der
letzte gestartete
Auftragsbearbeiter ?  — Ja → Eintrag
des Namens

Nein

204

Anzahl der
wartenden AB
vermindern — 206

Auftragssuche — 208

Auftrag
gefunden ? — Nein

210

Ja

Bearbeitung — 212

Auftrag
vollständig
bearbeitet ? — Nein

214

Ja

Wartet ein
Auftragsbearbeiter
(AB) ? — Ja

216

Nein

Name
gespeichert ? — Nein

218

Ja

(A)          (B)          (C)          (D)

Fig.4A

21

A        B   C      D

222

$$n := n + 1$$

220

$n = Max-1\ ?$    Nein

Ja

Namen löschen    224

Anzahl der
wartenden AB
erhöhen    226

228

Ende

Fig.4B

Fig.5